(19) Europäisches Patentamt
European Patent Office
Office européen des brevets

(11) **EP 1 763 667 B1**

(12) **FASCICULE DE BREVET EUROPEEN**

(45) Date de publication et mention
de la délivrance du brevet:
**13.02.2008 Bulletin 2008/07**

(51) Int Cl.:
***G01N 19/04*** *(2006.01)*    ***G01N 3/30*** *(2006.01)*
***G01N 3/08*** *(2006.01)*

(21) Numéro de dépôt: **05786101.5**

(22) Date de dépôt: **05.07.2005**

(86) Numéro de dépôt international:
**PCT/FR2005/001719**

(87) Numéro de publication internationale:
**WO 2006/013280 (09.02.2006 Gazette 2006/06)**

(54) **PROCEDE ET DISPOSITIF DE DETERMINATION DE L'EFFORT DE RUPTURE A LA TRACTION D'UN ELEMENT FIXE A UN SUPPORT**

VERFAHREN UND VORRICHTUNG ZUR BESTIMMUNG DER ZUGFESTIGKEIT EINES AN EINEM TRÄGER ANGEBRACHTEN ELEMENTS

METHOD AND DEVICE FOR DETERMINING THE TENSILE BREAKING STRENGTH OF AN ELEMENT FIXED TO A SUPPORT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.07.2004 FR 0407467**

(43) Date de publication de la demande:
**21.03.2007 Bulletin 2007/12**

(73) Titulaire: **Rincent BTP Services**
**91026 Evry Cedex (FR)**

(72) Inventeur: **RINCENT, Jean-Jacques,**
**RINCENT BTP SERVICES**
**F-91025 EVRY (FR)**

(74) Mandataire: **Intes, Didier Gérard André et al**
**Cabinet Beau de Loménie**
**158, rue de l'Université**
**75340 Paris Cedex 07 (FR)**

(56) Documents cités:
**US-A- 3 003 351      US-A- 3 425 263**
**US-A- 4 542 639      US-A- 4 993 876**
**US-A- 5 024 091**

EP 1 763 667 B1

**Description**

L'invention concerne un procédé et un dispositif de détermination de l'effort de rupture à la traction d'un élément fixé à un support, l'effort de rupture à la traction étant l'effort de traction minimum qui, exercé sur ledit élément, provoque une séparation de ce dernier par rapport au support.

L'élément peut être fixé au support par tous moyens appropriés, en particulier par collage.

Les éléments fixés, en particulier par collage, à un support sont généralement destinés au parement du mur extérieur ou intérieur, aux isolations, aux réparations, etc. Ces éléments fixés sont en particulier des carrelages, des carreaux, des vitrages, ou d'une manière générale tout type d'élément qui peut être fixé, en particulier par collage, à un support.

Il est connu de déterminer les efforts dans les éléments scellés en réalisant des essais destructifs, en particulier des essais de mise en traction directe.

Cependant, ces essais de mise en traction directe font que dans tous les cas, l'élément objet du test est détruit, puisqu'il s'agit d'atteindre la rupture. Dans ces conditions il est difficile de multiplier le nombre d'essais et leur résultat n'est donc pas représentatif d'une classe d'éléments.

Le document US-A-3 425 263 décrit un procédé et un dispositif de détermination de l'effort de rupture à la traction (ultimate tensile strength) d'un élément, dans lequel, on soumet l'élément à un impact d'un indenteur, on construit une courbe de rebonds de l'indenteur, un point de la courbe fournissant une grandeur liée à l'effort de rupture à la traction (F) de l'élément.

Le document US-A-3 003 351 décrit un procédé et un dispositif de détermination de l'effort de rupture à la traction d'un élément dans lequel on soumet l'élément à une impulsion ultrasonique et on détermine l'effort de rupture à la traction d'un élément à partir de la réponse vibratoire, en utilisant une courbe représentant l'effort de rupture à la traction en fonction de la vitesse de propagation des ondes ultrasoniques.

Le document US-A-5 024 091 décrit un un procédé et un dispositif de détermination de propriétés mécaniques d'un élément dans lequel on soumet l'élément à un impact pour générer une vibration de l'élément, on détermine les propriétés mécaniques à partir de la réponse vibratoire, en utilisant la vitesse de propagation des impulsions ou le taux d'atténuation des ondes de traction.

Le document US-A-4 542 639 décrit un procédé et un dispositif de test d'un élément fixé à un support pour évaluer les régions où la fixation est endommagée, dans lequel on soumet l'élément à un impact pour générer une vibration de l'élément en traction, on détermine le spectre de réponse vibratoire, et on compare cette réponse à un spectre de référence.

Le document US-A-4 993 876 décrit un un procédé et un dispositif de détermination de la force d'adhésion d'un élément fixé à un support, dans lequel on met l'élément en traction avec une force égale à la limite inférieure acceptable de la force d'adhésion pour vérifier que 'adhésion est correcte.

Le but de l'invention est de fournir un procédé et un dispositif qui permettent de déterminer l'effort de rupture à la traction d'un élément fixé à un support, en particulier par collage, à partir d'essais non destructifs. Les avantages que procure la détermination de l'effort de rupture à partir d'essais non destructifs sont l'intérêt économique de ce type de procédé et la non destruction de l'élément objet du test.

Ce but est atteint par le fait que les étapes suivantes sont réalisées :

a) on réalise $\underline{n}$ cycles comprenant chacun les étapes suivantes :

i. on met l'élément en traction en soumettant ce dernier à un effort de traction donné Fsi,
ii. on mesure la déformation Di de l'élément soumis à cet effort de traction Fsi donné,
iii. on soumet l'élément en traction à un impact de force donnée Fd pour générer une vibration de l'élément en traction,
iv. on relève la réponse vibratoire de l'élément en traction mis en vibration,
v. on détermine la raideur dynamique Rdi de l'élément en traction à partir de la réponse vibratoire,

b) on construit une courbe effort/déformation pour l'élément à partir des couples effort/déformation (Fsi, Di), le dernier point de ladite courbe correspondant au couple (Fsn, Dn) pour lequel l'effort de traction Fsn appliqué au cours des cycles précités est le plus grand,
c) on détermine les raideurs statiques Rsi de l'élément pour les efforts de traction Fsi autres que l'effort Fsn, à partir d'une relation entre le tracé de la courbe effort/déformation et la raideur statique de l'élément en traction,
d) on définit, pour ledit élément, une loi de correspondance entre la raideur statique Rsi et la raideur dynamique Rdi, à partir des raideurs dynamiques Rdi et des raideurs statiques Rsi déterminées pour chacun des efforts Fsi,
e) on détermine la raideur statique Rsn pour l'effort Fsn en appliquant cette loi de correspondance à la raideur dynamique Rdn déterminée pour cet effort Fsn,
f) à partir de ladite raideur statique Rsn et de l'application de ladite relation entre le tracé de la courbe effort/déformation et la raideur statique de l'élément en traction, on extrapole la courbe effort/déformation au-delà du dernier point (Fsn, Dn) et on détermine une asymptote de ladite courbe extrapolée, et
g) on définit l'effort de rupture à la traction de l'élément comme étant la valeur de l'effort qui correspond à cette asymptote.

Les cycles précités diffèrent les uns des autres en ce que l'effort de traction Fsi est différent d'un cycle à l'autre. A partir d'une valeur de départ, l'amplitude de l'effort en traction est incrémentée par paliers pour passer d'un cycle au suivant. En d'autres termes, après un cycle effectué pour un effort de traction donné, cet effort est incrémenté pour passer au cycle suivant.

Ainsi, le procédé permet à l'aide d'essais statiques de traction réalisés par paliers et ne conduisant pas à la rupture, et de mises en vibration de l'élément scellé testé, de déterminer par extrapolation la valeur de l'effort limite de traction, c'est-à-dire l'effort à la rupture à partir duquel l'élément fixé se sépare de son support.

Afin de pouvoir estimer l'effort de rupture à la traction, on détermine de préférence, préalablement aux étapes a) à g), un effort de rupture à la traction estimé, à partir d'essais de traction conduisant à la rupture d'éléments analogues, pour choisir la gamme des efforts de traction donnés à appliquer à l'élément, ainsi que le maximum correspondant à la rupture. On comprend que ces essais destructifs sont conduits sur un nombre limité d'éléments testés.

Avantageusement le nombre $\underline{n}$ de cycles de l'étape a) est compris entre trois et cinq, en étant de préférence égal à quatre.

Les sous-étapes i. à v. de cette étape a), sont conduites pour chaque cycle sous un effort de traction donné Fsi qui est différent pour chaque cycle, de préférence en étant croissant. L'effort de traction le plus grand appliqué au cours des cycles précités est de préférence au plus sensiblement égal à 70% de l'effort de rupture à la traction estimé pour le type d'élément testé.

Après avoir construit la courbe effort/déformation pour l'élément à partir des couples effort/déformation (Fsi, Di) de l'étape b), on peut déterminer la raideur statique Rsi de l'élément testé en traction. En fait, la raideur statique Rsi est matérialisée par la tangente en un point de la courbe effort/déformation. En l'espèce, la relation entre le tracé de la courbe effort/déformation et la raideur statique Rsi de l'élément en traction utilisé pour l'étape c) consiste avantageusement à considérer que la raideur statique Rsi pour un point (Fsi, Di) de la courbe correspond à la pente de la tangente à cette courbe en ce point.

Par ailleurs, la raideur dynamique Rdi de l'élément en traction est déterminée à partir de la réponse vibratoire de l'élément testé et mis en vibration, en construisant une courbe qui correspond au rapport de la vitesse de propagation sur la force appliquée, en fonction de la fréquence ; on détermine alors la raideur dynamique Rdi de l'élément testé en mesurant sur cette courbe, l'inverse de la pente à l'origine multiplié par 2Π.

L'invention concerne aussi un dispositif de détermination de l'effort de rupture à la traction d'un élément fixé à un support, en particulier par collage qui comporte :

- des moyens pour mettre l'élément en traction en soumettant ce dernier à un effort de traction donné Fsi,
- des moyens pour mesurer la déformation Di de l'élément soumis à cet effort de traction Fsi donné,
- des moyens pour soumettre l'élément en traction à un impact de force donnée Fd pour générer une vibration de l'élément en traction,
- des moyens pour relever la réponse vibratoire de l'élément en traction mis en vibration,
- des moyens pour déterminer la raideur dynamique Rdi de l'élément en traction à partir de la réponse vibratoire,
- des moyens pour construire une courbe effort/déformation pour l'élément à partir des couples effort/déformation (Fsi, Di), le dernier point de ladite courbe correspondant au couple (Fsn, Dn) pour lequel l'effort de traction Fsn appliqué au cours des cycles précités est le plus grand,
- une mémoire qui contient une relation entre le tracé de la courbe effort/déformation et la raideur statique de l'élément en traction,
- des moyens pour déterminer les raideurs statiques Rsi de l'élément pour les efforts de traction Fsi autres que l'effort Fsn, à partir de la relation entre le tracé de la courbe effort/déformation et la raideur statique de l'élément en traction,
- des moyens pour définir et enregistrer, pour ledit élément, une loi de correspondance entre la raideur statique Rsi et la raideur dynamique Rdi, à partir des raideurs dynamiques Rdi et des raideurs statiques Rsi déterminées pour chacun des efforts Fsi,
- des moyens pour appliquer cette loi de correspondance à la raideur dynamique Rdn déterminée pour cet effort Fsn et ainsi déterminer la raideur statique Rsn pour l'effort Fsn,
- des moyens pour extrapoler la courbe effort/déformation au-delà du dernier point (Fsn, Dn) à partir de ladite raideur statique Rsn et de ladite relation entre le tracé de la courbe effort/déformation et la raideur statique de l'élément en traction, et des moyens pour déterminer une asymptote de ladite courbe extrapolée, et
- des moyens pour relever la valeur de l'effort de rupture à la traction de l'élément qui correspond à la valeur de l'effort à cette asymptote.

Avantageusement les moyens pour soumettre l'élément en traction à un impact de force donnée pour générer une vibration de l'élément en traction comportent un marteau d'impact équipé d'un capteur de force et destiné à frapper l'élément testé, de préférence dans son axe, pour le mettre en vibration.

Avantageusement les moyens pour relever la réponse vibratoire de l'élément en traction mis en vibration comportent un capteur de vitesse, du type géophone ou vélocimètre, ou un accéléromètre.

Les moyens pour déterminer la raideur dynamique de l'élément en traction à partir de la réponse vibratoire comportent avantageusement des moyens de traitement mathématiques destinés à traiter la réponse vibratoire de l'élément testé. En particulier, les moyens de traitement mathématiques peuvent comporter des transformées Fourier qui permettent de traiter la réponse vibratoire pour obtenir une courbe représentant la vitesse sur la force d'impact, en fonction de la fréquence.

L'invention sera bien comprise et ses avantages apparaîtront mieux à la lecture de la description détaillée qui suit, de mode de réalisation de l'invention représenté à titre d'exemple non limitatif.

La description se réfère aux dessins annexés sur lesquels :

- la figure 1 représente schématiquement un élément fixé par collage,
- la figure 2 représente schématiquement un élément fixé à un support à l'aide de moyens de vissage,
- la figure 3 représente schématiquement le procédé selon l'invention,
- la figure 4 représente schématiquement la réponse vibratoire de l'élément testé mis en vibration, et
- la figure 5 représente schématiquement la courbe effort/déformation extrapolée jusqu'à l'effort de rupture.

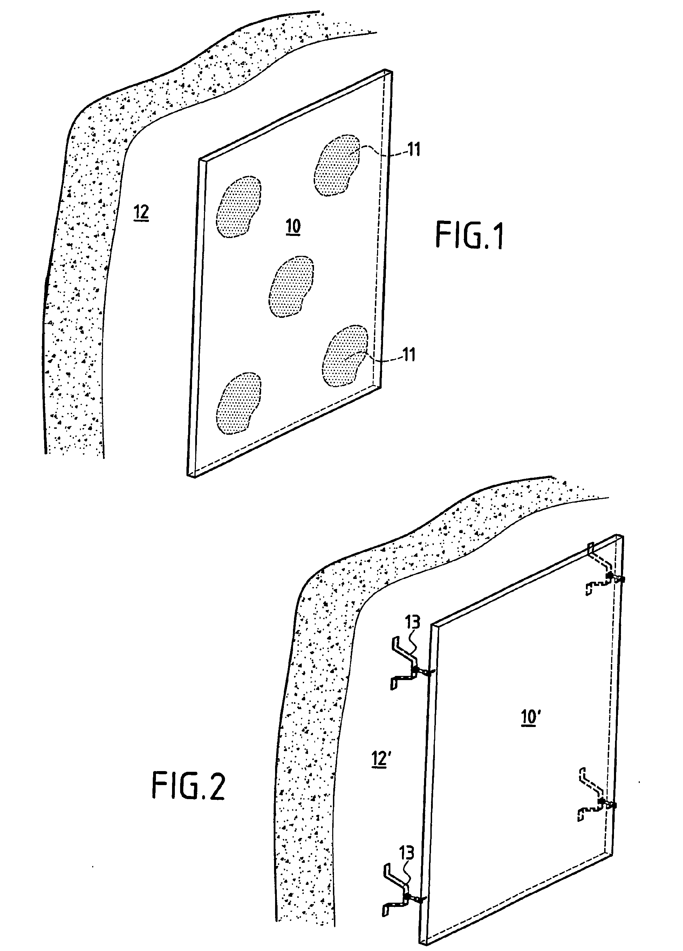

La figure 1 illustre un élément 10 fixé à un support 12, en l'espèce par collage, à l'aide de tous moyens de collage connus, comme par exemple par points de colle 11. L'élément 10 fixé est par exemple une plaque de parement destinée à améliorer l'esthétique d'un mur 12.

La figure 2 illustre un élément 10' fixé à un support 12' à l'aide de moyens de fixation connus, du type visserie 13.

Le dispositif selon l'invention comporte des moyens 14 pour mettre l'élément en traction sous un effort de traction Fsi dont on peut déterminer la valeur.

Le dispositif comporte par ailleurs des moyens 18 pour soumettre l'élément en traction à un impact de force Fd déterminée pour générer une vibration de l'élément en traction. L'impact de cette force Fd est déterminé, par exemple en étant mesuré au moment de l'impact.

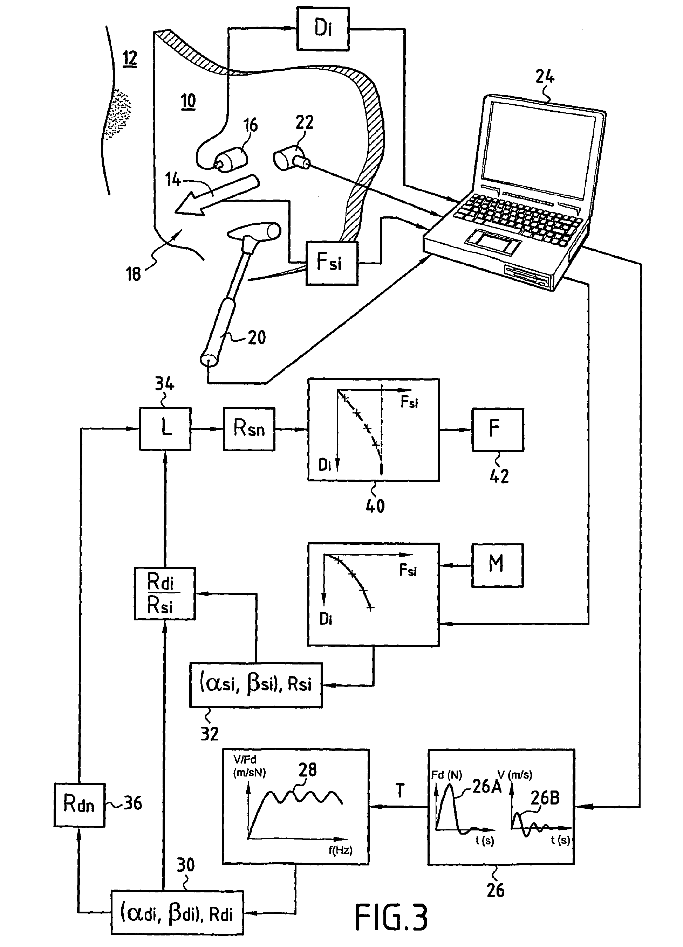

Les moyens 18 pour soumettre l'élément à un impact de force Fd, comportent un marteau d'impact 20 équipé d'un capteur de force (non représenté), comme illustré sur la figure 3 qui permet de mesurer la force d'impact Fd appliquée sur l'élément.

Le dispositif comporte en outre des moyens pour relever la réponse vibratoire de l'élément 10 mis en vibration, qui comprennent un capteur de vitesse 22 du type géophone ou vélocimètre, ou un accéléromètre, ainsi que des moyens 16 pour déterminer la déformation Di de l'élément soumis à cet effort de traction Fsi donné.

Le dispositif comporte par ailleurs, des moyens d'acquisition et de traitement 24 reliés aux moyens (capteur) 16 pour déterminer la déformation Di, et au capteur de vitesse 22. Les moyens d'acquisition et de traitement 24 permettent ainsi, d'une part, de tracer la courbe effort/déformation en vue de la détermination de la raideur statique Rsi, et d'autre part, de réaliser des transformées de Fourier T de la réponse vibratoire 26 de l'élément 10 testé afin de pouvoir analyser cette dernière en vue de la détermination de la raideur dynamique Rdi.

La réponse vibratoire 26 correspond en fait à une courbe 26A qui représente le signal de force d'impact Fd en Newton (N), en fonction du temps t en secondes (s), et à une courbe 26B qui représente le signal de vitesse V de propagation de l'onde de vibration dans l'élément, en mètre/seconde (m/s), en fonction du temps t en secondes (s).

Les essais permettant de déterminer l'effort de rupture à la traction de l'élément 10 testé sont une combinaison d'essais statiques et d'essais dynamiques. En fait, ces essais consistent en la mise en traction de l'élément testé, puis en la mise en vibration de cet élément testé contraint en traction. La réponse vibratoire de l'élément ainsi mis en traction et en vibration est alors déterminée pour chaque essai.

On comprend donc que l'élément testé est à la fois soumis à un essai statique (essai de traction) et un essai dynamique (mise en vibration) au cours de chaque cycle, sachant que la force de traction appliquée est différente d'un cycle à l'autre.

Ainsi, en faisant varier l'effort de traction Fsi auquel est soumis l'élément testé d'un cycle à l'autre, on obtient une réponse vibratoire différente de l'élément testé. On peut ainsi construire une base de données comportant des informations relatives à l'effort de traction Fsi auquel est soumis l'élément testé, à la déformation Di de l'élément testé suite à cet effort de traction, et à la raideur dynamique Rdi de l'élément mis en traction et en vibration.

Avant d'effectuer les essais selon l'invention, il faut tout d'abord déterminer la gamme d'efforts statiques Fsi que l'on va pouvoir appliquer au cours des différents cycles, aux éléments 10 à tester, sans provoquer leur rupture. Pour ce faire, on détermine préalablement l'effort de rupture à la traction estimé. Ceci peut être réalisé à partir d'essais de traction conduisant à la rupture sur un nombre limité d'éléments analogues aux éléments testés. Cet effort de rupture à la traction estimé peut également ressortir des indications du fabricant ou du poseur de l'élément fixé, ou bien provenir de connaissances générales sur ce type d'éléments, par exemple constituées en base de données.

Dès que l'effort de rupture à la traction estimé est connu, on détermine le nombre de cycles à effectuer. On choisit en général un nombre $\underline{n}$ de cycles compris entre trois et cinq, de préférence égal à quatre.

Par ailleurs, pour éviter tout risque de rupture lors des essais selon l'invention, on choisit d'appliquer des efforts de traction Fsi dans une plage comprise entre 0% et 70% de l'effort de rupture à la traction estimé, l'effort de traction Fsn le plus grand appliqué au cours de ces cycles étant préférentiellement inférieur ou égal à 70% de l'effort de rupture à la traction estimé.

Nous allons à présent exposer la manière dont on réalise chacun de ces cycles pendant l'étape a).

Après avoir mis l'élément 10 en traction en le soumettant à un effort de traction Fsi connu, on mesure la déformation Di de l'élément 10 soumis à cet effort de traction Fsi à l'aide des moyens de mesure de déformation 16. Tout en maintenant l'élément 10 sous cette contrainte en traction, on le soumet à un impact de force Fd, à l'aide du marteau d'impact 20, pour générer une vibration de l'élément 10 testé.

Après avoir réalisé cet essai dynamique, alors que l'élément 10 est toujours soumis en traction (essai statique), on enregistre la réponse vibratoire 26 de l'élément 10 mis en vibration, à l'aide du capteur de vitesse 22 et des moyens d'acquisition et de traitement 24.

La réponse vibratoire 26 correspond en fait à une courbe 26A qui représente le signal de force d'impact Fd en Newton (N), en fonction du temps t en secondes (s), et d'une courbe 26B qui représente le signal de vitesse V de propagation de la vibration dans l'élément, en mètre/seconde (m/s), en fonction du temps t en secondes (s).

Ces deux courbes de réponse 26A et 26B sont ensuite traitées à l'aide d'un traitement mathématique connu implanté dans les moyens d'acquisition et de traitement 24, comportant en particulier un traitement par une transformée de Fourier T. Les moyens d'acquisition et de traitement 24 permettent alors de tracer une courbe traitée 28, représentant le quotient de la vitesse de propagation V à la force d'impact Fd appliquée, V/Fd (en m/sN), en fonction de la fréquence f en hertz (Hz), comme illustré sur la figure 3.

La raideur dynamique Rdi de l'élément 10 peut alors être évaluée à partir de la courbe traitée 28, en déterminant l'inverse de la pente à l'origine (multiplié par 2Π). Le dispositif comporte à cet effet, des moyens 30 pour déterminer cette raideur dynamique Rdi à partir de la courbe traitée 28. Ainsi, l'allure de la courbe 28 au voisinage de l'origine est proche d'un segment rectiligne, qui s'étend entre l'origine et un point de coordonnée ayant pour abscisse et ordonnée, respectivement (βdi, αdi).

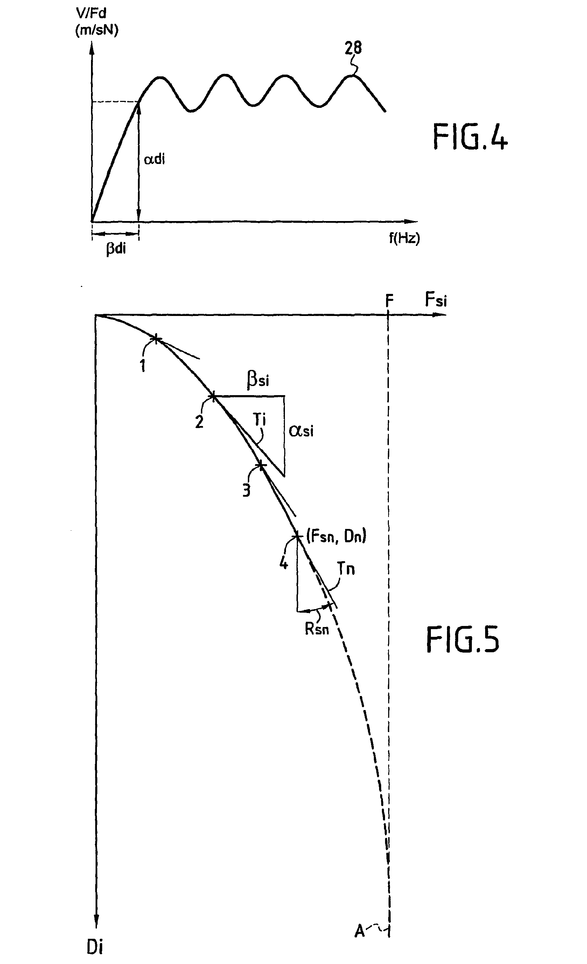

Dans ce cas, $Rdi = \dfrac{\beta di}{\alpha di} \times 2\pi$, comme illustré sur la figure 4.

Après avec effectué les quatre cycles, chacun pour une force Fd d'impact différente, les étapes b) à g) sont conduites de la manière suivante.

### Etapes b) et c)

On construit par ailleurs au cours de chacun de ces cycles, une courbe effort/déformation, comme illustré sur la figure 5, à partir des couples effort/déformation (Fsi, Di) relevés au cours de chacun de ces quatre cycles 1, 2, 3 et n = 4. Les valeurs des forces de traction appliquées Fsi retenues pour ces quatre cycles, correspondent par exemple respectivement à 10%, 25%, 50% et 70% de l'effort de rupture à la traction estimé.

On détermine la raideur statique Rsi à partir de cette courbe effort/déformation, en déterminant la tangente aux points de coordonnées (Fsi, Di) pour chacun des quatre cycles. Le dispositif comporte à cet effet, une mémoire M qui contient une relation entre le tracé de la courbe effort/déformation et la raideur statique Rsi de l'élément 10 en traction et des moyens 32 pour déterminer cette raideur statique Rsi à partir de la courbe effort/déformation ainsi tracée.

En fait la raideur statique Rsi sous un effort donné Fsi est égale au rapport $\dfrac{\beta si}{\alpha si}$ et est exprimée en newton/mètre (N/m). αsi et βsi étant mesurés pour la tangente Ti au point considéré.

Ainsi, en effectuant les quatre cycles précités, on obtient quatre couples effort/déformation (Fsi, Di) que l'on peut reporter point par point (points 1 à 4) sur le graphe de la figure 5.

Par ailleurs, on peut reporter sur ce même graphe de la figure 5, les valeurs des raideurs statiques Rsi calculées pour les points 1 à 3 (le quatrième cycle ne permet pas d'évaluer la raideur statique au point 4), de la même manière que pour les points 1 à 3.

Dès lors, on peut tracer la courbe effort/déformation entre l'origine et le point 4 correspondant au couple (Fsn, Dn).

### Etape d)

Des essais de laboratoire ont par ailleurs permis de déterminer que pour un effort Fsi donné, la raideur statique Rsi est proportionnelle à la raideur dynamique Rdi obtenue sur un élément mis en vibration et soumis à cette force Fsi.

En fait, $L = \dfrac{Rdi}{Rsi} = k$ où k est une constante.

De ce fait, à partir de cette loi L de correspondance entre la raideur statique Rsi et la raideur dynamique Rdi, déterminée pour les points 1, 2 et 3 en faisant le rapport entre les raideurs dynamiques et les raideurs statiques respectives pour chacun des points, on peut déterminer la constante k ; en conséquence, la loi L est complètement définie. Le dispositif comporte à cet effet des moyens 34 pour définir et enregistrer cette loi L.

### Etape e)

Ensuite, il convient simplement d'appliquer cette loi L de correspondance à la raideur dynamique Rdn déterminée au cours du quatrième cycle, pour déterminer la raideur statique Rsn au point 4. Pour ce faire, le dispositif comporte des moyens 36 pour appliquer cette loi L de correspondance à la raideur dynamique Rdn déterminée pour cet effort Fsn et ainsi déterminer la raideur statique Rsn pour l'effort Fsn.

Etapes f) et g)

On peut alors reporter la raideur statique Rsn du point 4 qui correspond, rappelons-le à la pente de la tangente à la courbe effort/déformation et extrapoler la courbe effort/déformation au-delà de ce dernier et quatrième point (Fsn, Dn). En effet, on a constaté que plus la force de traction appliquée est importante, plus la pente de la tangente à la courbe effort/déformation l'est aussi, de sorte que la courbe a tendance à tendre vers une asymptote.

Ainsi, en connaissant les coordonnées (Fsn, Dn) du point 4 et la tangente Tn à la courbe en ce point, on peut extrapoler de manière plus précise, la courbe effort/déformation en la faisant tendre vers une asymptote.

En déterminant alors l'asymptote A de la courbe ainsi extrapolée (illustrée en traits pointillés sur le graphe de la figure 5), à l'aide de moyens d'extrapolation disponibles dans le dispositif, on peut évaluer l'effort de rupture à la traction F de l'élément 10 qui correspond à la valeur de l'effort à cette asymptote A. Le dispositif comporte des moyens 40 qui permettent de définir cette asymptote A et des moyens 42 qui permettent de déterminer l'effort de rupture à la traction F de l'élément 10 en relevant la valeur de l'effort qui correspond à cette asymptote A.

En effet, dès lors que l'on connaît les coordonnées du point 4 et la tangente Tn (c'est-à-dire Rsn) en ce point, il suffit d'extrapoler la courbe en la prolongeant à partir du point 4 et de déterminer l'asymptote A de cette courbe pour obtenir l'effort de rupture à la traction F.

**Revendications**

1. Procédé de détermination de l'effort de rupture à la traction (F) d'un élément (10 ; 10') fixé à un support (12 ; 12'), l'effort de rupture à la traction (F) étant l'effort de traction minimum qui, exercé sur ledit élément (10 ; 10'), provoque une séparation de ce dernier (10 ; 10') par rapport au support (12 ; 12'), dans lequel les étapes suivantes sont réalisées :

   a) on réalise n cycles comprenant chacun les étapes suivantes :

   i. on met l'élément (10 ; 10') en traction en soumettant ce dernier (10 ; 10') à un effort de traction donné Fsi,
   ii. on mesure la déformation Di de l'élément (10 ; 10') soumis à cet effort de traction Fsi donné,
   iii. on soumet l'élément (10 ; 10') en traction à un impact de force Fd déterminée pour générer une vibration de l'élément (10 ; 10') en traction,
   iv. on relève la réponse vibratoire (26, 26A, 26B, 28) de l'élément (10 ; 10') en traction mis en vibration,
   v. on détermine la raideur dynamique Rdi de l'élément (10 ; 10') en traction à partir de la réponse vibratoire,

   b) on construit une courbe effort/déformation pour l'élément (10 ; 10') à partir des couples effort/déformation (Fsi, Di), le dernier point (4) de ladite courbe correspondant au couple (Fsn, Dn) pour lequel l'effort de traction Fsn appliqué au cours des cycles (1, 2, 3, 4) précités est le plus grand,
   c) on détermine les raideurs statiques Rsi de l'élément (10 ; 10') pour les efforts de traction Fsi autres que l'effort Fsn, à partir d'une relation entre le tracé de la courbe effort/déformation et la raideur statique Rsi de l'élément (10 ; 10') en traction,
   d) on définit, pour ledit élément (10 ; 10'), une loi (L) de correspondance entre la raideur statique Rsi et la raideur dynamique Rdi, à partir des raideurs dynamiques Rdi et des raideurs statiques Rsi déterminées pour chacun des efforts Fsi,
   e) on détermine la raideur statique Rsn pour l'effort Fsn en appliquant cette loi (L) de correspondance à la raideur dynamique Rdn déterminée pour cet effort Fsn,
   f) à partir de ladite raideur statique Rsn et de l'application de ladite relation entre le tracé de la courbe effort/déformation et la raideur statique de l'élément (10 ; 10') en traction, on extrapole la courbe effort/déformation au-delà du dernier point (Fsn, Dn) et on détermine une asymptote (A) de ladite courbe extrapolée, et
   g) on définit l'effort de rupture à la traction (F) de l'élément (10 ; 10') comme étant la valeur de l'effort qui correspond à cette asymptote (A).

2. Procédé selon la revendication 1, **caractérisé en ce que** la relation entre le tracé de la courbe effort/déformation et la raideur statique Rsi de l'élément (10 ; 10') en traction utilisée pour l'étape c) consiste à considérer que la raideur statique Rsi pour un point (Fsi, Di) de ladite courbe est la pente de la tangente à cette courbe en ce point.

3. Procédé selon la revendication 1 ou 2, **caractérisé en ce que** la loi de correspondance entre les raideurs dynamiques Rdi et les raideurs statiques Rsi définie à l'étape d) est une loi de proportionnalité.

4. Procédé selon l'une quelconque des revendications précédentes, **caractérisé en ce que** n est compris entre trois et cinq, de préférence égal à quatre.

**EP 1 763 667 B1**

5. Procédé selon l'une quelconque des revendications précédentes, **caractérisé en ce qu'**on détermine préalablement un effort de rupture à la traction estimé, pour choisir les efforts de traction donnés Fsi à appliquer à l'élément (10 ; 10').

6. Procédé selon la revendication précédente, **caractérisé en ce que** l'effort de traction Fsn le plus grand appliqué au cours des cycles précités est inférieur ou égal à 70% de l'effort de rupture à la traction estimé.

7. Dispositif de détermination de l'effort de rupture à la traction d'un élément (10 ; 10') fixé à un support (12 ; 12'), l'effort de rupture à la traction étant l'effort de traction minimum qui, exercé sur ledit élément (10 ; 10'), provoque une séparation de ce dernier par rapport au support, comportant :

> - des moyens (14) pour mettre l'élément (10 ; 10') en traction en soumettant ce dernier à un effort de traction donné Fsi,
> - des moyens (16) pour mesurer la déformation Di de l'élément (10 ; 10') soumis à cet effort de traction Fsi donné,
> - des moyens (18, 20) pour soumettre l'élément (10 ; 10') en traction à un impact de force Fd déterminée, pour générer une vibration de l'élément (10 ; 10') en traction,
> - des moyens (22) pour relever la réponse vibratoire de l'élément (10 ; 10') en traction mis en vibration,
> - des moyens (30) pour déterminer la raideur dynamique Rdi de l'élément (10 ; 10') en traction à partir de la réponse vibratoire (26, 26A, 26B, 28),
> - des moyens (24) pour construire une courbe effort/déformation pour l'élément (10 ; 10') à partir des couples effort/déformation (Fsi, Di), le dernier point de ladite courbe correspondant au couple (Fsn, Dn) pour lequel l'effort de traction Fsn appliqué au cours des cycles précités est le plus grand,
> - une mémoire (M) qui contient une relation entre le tracé de la courbe effort/déformation et la raideur statique Rsi de l'élément (10 ; 10') en traction,
> - des moyens (32) pour déterminer les raideurs statiques Rsi de l'élément (10 ; 10') pour les efforts de traction Fsi autres que l'effort Fsn, à partir de la relation entre le tracé de la courbe effort/déformation et la raideur statique de l'élément (10 ; 10') en traction,
> - des moyens (34) pour définir et enregistrer, pour ledit élément (10 ; 10'), une loi (L) de correspondance entre la raideur statique Rsi et la raideur dynamique Rdi, à partir des raideurs dynamiques Rdi et des raideurs statiques Rsi déterminées pour chacun des efforts Fsi,
> - des moyens (36) pour appliquer cette loi (L) de correspondance à la raideur dynamique Rdn déterminée pour cet effort Fsn et ainsi déterminer la raideur statique Rsn pour l'effort Fsn,
> - des moyens (38) pour extrapoler la courbe effort/déformation au-delà du dernier point (Fsn, Dn) à partir de ladite raideur statique Rsn et de ladite relation entre le tracé de la courbe effort/déformation et la raideur statique de l'élément (10 ; 10') en traction, et des moyens (40) pour déterminer une asymptote (A) de ladite courbe extrapolée, et
> - des moyens (42) pour relever la valeur de l'effort de rupture à la traction de l'élément (10 ; 10') qui correspond à la valeur de l'effort à cette asymptote.

8. Dispositif selon la revendication précédente, **caractérisé en ce qu'**il comporte des moyens de traitement mathématiques (T) destinés à traiter la réponse vibratoire (26, 26A, 26B) de l'élément (10 ; 10').

**Claims**

1. Method for determining the tensile breaking strength (F) of an element (10; 10') fixed to a support (12; 12'), the tensile breaking strength (F) being the minimum tensile stress that, exerted on said element (10; 10'), causes the latter (10; 10') to separate from the support (12; 12'), in which the following steps are carried out:

> a) carrying out $\underline{n}$ cycles each comprising the following steps:

>> i. putting the element (10; 10') into traction by subjecting the latter (10; 10') to a given tensile stress Fsi,
>> ii. measuring the deformation Di of the element (10; 10') subjected to this given tensile stress Fsi,
>> iii. subjecting the element (10; 10') in traction to an impact of a given force Fd in order to generate vibration in the element (10; 10') in traction,
>> iv. recording the vibratory response (26, 26A, 26B, 28) of the element (10; 10') in traction put into vibration,
>> v. determining the dynamic stiffness Rdi of the element (10; 10') in traction on the basis of the vibratory response,

> b) constructing a stress/deformation curve for the element (10; 10') on the basis of the stress/deformation couples (Fsi, Di), the last point (4) on said curve corresponding to the couple (Fsn, Dn) for which the tensile stress Fsn applied during the aforementioned cycles (1, 2, 3, 4) is greatest,

c) determining the static stiffnesses Rsi of the element (10; 10') for tensile stresses Fsi other than the stress Fsn, on the basis of a relationship between the trace of the stress/deformation curve and the static stiffness Rsi of the element (10; 10') in traction,

d) defining for said element (10; 10'), a rule (L) of correspondence between the static stiffness Rsi and the dynamic stiffness Rdi, on the basis of the dynamic stiffnesses Rdi and the static stiffnesses Rsi determined for each of the stresses Fsi,

e) determining the static stiffness Rsn for the stress Fsn by applying this rule (L) of correspondence to the dynamic stiffness Rdn determined for this stress Fsn,

f) on the basis of said static stiffness Rsn and the application of said relationship between the trace of the stress/deformation curve and the static stiffness of the element (10; 10') in traction, extrapolating the stress/deformation curve beyond the last point (Fsn, Dn) and determining an asymptote (A) of said extrapolated curve, and

g) defining the tensile breaking strength (F) of the element (10; 10') as being the value of the stress that corresponds to this asymptote (A).

2. Method according to Claim 1, **characterised in that** the relationship between the trace of the stress/deformation curve and the static stiffness Rsi of the element (10; 10') in traction used for step c) consists in considering that the static stiffness Rsi for a point (Fsi, Di) on said curve is the gradient of the tangent to this curve at this point.

3. Method according to Claim 1 or 2, **characterised in that** the rule of correspondence between the dynamic stiffnesses Rdi and the static stiffnesses Rsi defined in step d) is a rule of proportionality.

4. Method according to any one of the preceding claims, **characterised in that** n is comprised between three and five, preferably equal to four.

5. Method according to any one of the preceding claims, **characterised in that** an estimated tensile breaking strength is determined beforehand, in order to choose the given tensile stresses Fsi to be applied to the element (10; 10').

6. Method according to the preceding claim, **characterised in that** the greatest tensile stress Fsn applied during the aforementioned cycles is less than or equal to 70% of the estimated tensile breaking strength.

7. Device for determining the tensile breaking strength of an element (10; 10') fixed to a support (12; 12'), the tensile breaking strength being the minimum tensile stress that, exerted on said element (10; 10'), causes a separation of the latter from the support, including:

- means (14) for putting the element (10; 10') into traction by subjecting the latter to a given tensile stress Fsi,
- means (16) for measuring the deformation Di of the element (10; 10') subjected to this given tensile stress Fsi,
- means (18, 20) for subjecting the element (10; 10') in traction to an impact of a given force Fd, in order to generate vibration in the element (10; 10') in traction,
- means (22) for recording the vibratory response of the element (10; 10') in traction put into vibration,
- means (30) for determining the dynamic stiffness Rdi of the element (10; 10') in traction on the basis of the vibratory response (26, 26A, 26B, 28),
- means (24) for constructing a stress/deformation curve for the element (10; 10') on the basis of the stress/deformation couples (Fsi, Di), the last point on said curve corresponding to the couple (Fsn, Dn) for which the tensile stress Fsn applied during the aforementioned cycles is greatest,
- a memory (M) that contains a ratio between the trace of the stress/deformation curve and the static stiffness Rsi of the element (10; 10') in traction,
- means (32) for determining the static stiffnesses Rsi of the element (10; 10') for tensile stresses Fsi other than the stress Fsn, on the basis of the relationship between the trace of the stress/deformation curve and the static stiffness of the element (10; 10') in traction,
- means (34) for defining and recording, for said element (10; 10'), a rule (L) of correspondence between the static stiffness Rsi and the dynamic stiffness Rdi, on the basis of the dynamic stiffnesses Rdi and of the static stiffnesses Rsi determined for each of the stresses Fsi,
- means (36) for applying this rule (L) of correspondence to the dynamic stiffness Rdn determined for this stress Fsn and thus for determining the static stiffness Rsn for the stress Fsn,
- means (38) for extrapolating the stress/deformation curve beyond the last point (Fsn, Dn) on the basis of said static stiffness Rsn and of said relationship between the trace of the stress/deformation curve and the static stiffness of the element (10; 10') in traction, and means (40) for determining an asymptote (A) of said extrapolated curve, and
- means (42) for recording the value of the tensile breaking strength of the element (10; 10') that corresponds to the value of the stress at this asymptote.

8. Device according to the preceding claim, **characterised in that** it comprises mathematical processing means (T) intended to process the vibratory response (26, 26A, 26B) of the element (10; 10').


**Patentansprüche**

1. Verfahren zum Bestimmen der Zugfestigkeitskraft (F) eines Elements (10; 10'), das an einem Träger (12;12') angebracht ist, wobei die Zugfestigkeitskraft (F) die Mindestzugkraft ist, die, auf das Element (10; 10') ausgeübt, ein Trennen dieses Letzteren (10;10') von dem Träger (12; 12') verursacht, wobei die folgenden Schritte ausgeführt werden:

   a) man führt n Zyklen aus, die jeweils die folgenden Schritte aufweisen:

   i. man setzt das Element (10; 10') unter Zug, indem man Letzteres (10; 10') einer gegebenen Zugkraft Fsi aussetzt,
   ii. man mißt die Verformung Di des Elements (10; 10'), das dieser gegebenen Zugkraft Fsi ausgesetzt wird,
   iii. man setzt das Element (10; 10') unter Zug einem Aufprall mit einer bestimmten Kraft Fd aus, um eine Vibration des Elements (10; 10') unter Zug zu erzeugen,
   iv. man mißt die Vibrationsreaktion (26, 26A, 26B, 28) des Elements (10; 10') unter Zug, das zum Schwingen gebracht wird,
   v. man bestimmt die dynamische Steifheit Rdi des Elements (10; 10') unter Zug ausgehend von der Vibrationsreaktion,

   b) man bildet eine Kraft-/Verformungskurve für das Element (10; 10') ausgehend von den Kraft-/Verformungsmomenten (Fsi, Di), wobei der letzte Punkt (4) der Kurve dem Moment (Fsn, Dn), für das die im Laufe der oben erwähnten Zyklen (1, 2, 3, 4) angelegte Zugkraft Fsn am größten ist, entspricht,
   c) man bestimmt die statischen Steifheiten Rsi des Elements (10; 10') für die anderen Zugkräfte Fsi als die Kraft Fsn, ausgehend von einer Beziehung zwischen dem Verlauf der Kraft-/Verformungskurve und der statischen Steifheit Rsi des Elements (10; 10') unter Zug,
   d) man definiert für das Element (10; 10') ein Gesetz (L) der Entsprechung zwischen der statischen Steifheit Rsi und der dynamischen Steifheit Rdi ausgehend von den dynamischen Steifheiten Rdi und den statischen Steifheiten Rsi, die für jede der Kräfte Fsi bestimmt wurden,
   e) man bestimmt die statische Steifheit Rs für die Kraft Fsn, indem man dieses Gesetz (L) der Entsprechung an die dynamische Steifheit Rdn, die für diese Kraft Fsn bestimmt wurde, anwendet,
   f) ausgehend von der statischen Steifheit Rsn und der Anwendung der Beziehung zwischen dem Verlauf der Kraft-/Verformungskurve und der statischen Steifheit des Elements (10; 10') unter Zug, extrapoliert man die Kraft-/Verformungskurve über den letzten Punkt (Fsn, Dn) hinaus und bestimmt eine Asymptote (A) der extrapolierten Kurve und
   g) man definiert die Zugfestigkeitskraft (F) des Elements (10; 10') als den Wert der Kraft, der dieser Asymptote (A) entspricht.

2. Verfahren nach Anspruch 1, **dadurch gekennzeichnet, daß** die Beziehung zwischen dem Verlauf der Kraft-/Verformungskurve und der statischen Steifheit Rsi des Elements (10; 10') unter Zug, die für den Schritt c) verwendet wird, darin besteht, anzunehmen, daß die statische Steifheit Rsi für einen Punkt (Fsi, Di) der Kurve die Neigung der Tangente zu dieser Kurve in diesem Punkt ist.

3. Verfahren nach Anspruch 1 oder 2, **dadurch gekennzeichnet, daß** das Gesetz der Entsprechung zwischen den dynamischen Steifheiten Rdi und den statischen Steifheiten Rsi, das im Schritt d) definiert wird, ein Proportionalitätsgesetz ist.

4. Verfahren nach einem der vorhergehenden Ansprüche, **dadurch gekennzeichnet, daß** n zwischen drei und fünf liegt und vorzugsweise gleich vier ist.

5. Verfahren nach einem der vorhergehenden Ansprüche, **dadurch gekennzeichnet, daß** man vorab eine geschätzte Zugfestigkeitskraft bestimmt, um die gegebenen Zugkräfte Fsi, die an das Element (10; 10') anzulegen sind, auszuwählen.

6. Verfahren nach dem vorhergehenden Anspruch, **dadurch gekennzeichnet, daß** die größte Zugkraft Fsn, die im Laufe der oben genannten Zyklen angelegt wird, kleiner oder gleich 70 % der geschätzten Zugfestigkeitskraft ist.

7. Vorrichtung zum Bestimmen der Zugfestigkeitskraft eines Elements (10; 10'), das an einem Träger (12; 12') befestigt ist, wobei die Zugfestigkeitskraft die Mindestzugkraft ist, die, auf das Element (10; 10') ausgeübt, ein Trennen dieses Letzteren von dem Träger verursacht, folgendes aufweisend:

- Mittel (14), um das Element (10; 10') unter Zug zu setzen, indem Letzteres einer gegebenen Zugkraft Fsi ausgesetzt wird,
- Mittel (16) zum Messen der Verformung Di des Elements (10; 10'), das dieser gegebenen Zugkraft Fsi ausgesetzt wird,
- Mittel (18, 20), um das Element (10; 10') unter Zug einem Aufprall mit bestimmter Kraft Fd auszusetzen, um eine Vibration des Elements (10; 10') unter Zug zu erzeugen,
- Mittel (22) zum Messen der Vibrationsreaktion des Elements (10; 10') unter Zug, das in Schwingung versetzt wurde,
- Mittel (30) zum Bestimmen der dynamischen Steifheit Rdi des Elements (10; 10') unter Zug ausgehend von der Vibrationsreaktion (26, 26A, 26B, 28),
- Mittel (24) zum Aufbauen einer Kraft-/Verformungskurve für das Element (10; 10') ausgehend von den Kraft-/Verformungsmomenten (Fsi, Di), wobei der letzte Punkt der Kurve dem Moment (Fsn, Dn) entspricht, bei dem die Zugkraft Fsn, die im Laufe der oben genannten Zyklen angelegt wird, am größten ist,
- einen Speicher (M), der eine Beziehung zwischen dem Verlauf der Kraft-/Verformungskurve und der statischen Steifheit Rsi des Elements (10; 10') unter Zug enthält,
- Mittel (32) zum Bestimmen der statischen Steifheiten Rsi des Elements (10; 10') für die anderen Zugkräfte Fsi als die Kraft Fsn, ausgehend von der Beziehung zwischen dem Verlauf der Kraft-/Verformungskurve und der statischen Steifheit des Elements (10; 10') unter Zug,
- Mittel (34) zum Definieren und Aufzeichnen für das Element (10; 10') eines Gesetzes (L) der Entsprechung zwischen der statischen Steifheit Rsi und der dynamischen Steifheit Rdi ausgehend von den dynamischen Steifheiten Rdi und statischen Steifheiten Rsi, die für jede der Kräfte Fsi bestimmt werden,
- Mittel (36) zum Anwenden dieses Gesetzes (L) der Entsprechung an die dynamische Steifheit Rdn, die für diese Kraft Fsn bestimmt wird und dadurch Bestimmen der statischen Steifheit Rsn für die Kraft Fsn,
- Mittel (38) zum Extrapolieren der Kraft-/Verformungskurve über den letzten Punkt (Fsn, Dn) hinaus, ausgehend von der statischen Steifheit Rsn und der Beziehung zwischen dem Verlauf der Kraft-/Verformungskurve und der statischen Steifheit des Elements (10; 10') unter Zug, und Mittel (40) zum Bestimmen einer Asymptote (A) der extrapolierten Kurve, und
- Mittel (42) zum Messen des Zugfestigkeitskraftwerts des Elements (10; 10'), der dem Kraftwert bei dieser Asymptote entspricht.

8. Vorrichtung nach dem vorhergehenden Anspruch, **dadurch gekennzeichnet, daß** sie mathematische Verarbeitungsmittel (T) aufweist, die dazu bestimmt sind, die Vibrationsreaktion (26, 26A, 26B) des Elements (10; 10') zu verarbeiten.

FIG.1

10

11

11

12

FIG.2

13

13

10'

12'

FIG.3

V/Fd
(m/sN)

28

FIG.4

αdi

βdi

f(Hz)

F    Fsi

1

βsi

2    Ti    αsi

3

(Fsn, Dn)

4    Tn

Rsn

FIG.5

A

Di

**EP 1 763 667 B1**

**RÉFÉRENCES CITÉES DANS LA DESCRIPTION**

**Documents brevets cités dans la description**

- US 3425263 A
- US 3003351 A
- US 5024091 A
- US 4542639 A
- US 4993876 A